# EUROPEAN PATENT SPECIFICATION

(11) **EP 2 546 130 B1**
(45) Date of publication and mention of the grant of the patent: **01.04.2015**
(21) Application number: 12175529.2
(22) Date of filing: 09.07.2012
(51) Int. Cl.: B62K 25/28, B62H 1/02, B62J 25/00, B62K 11/04, B62K 11/14, B62K 13/08

(54) **Saddle type vehicle**
Motorrad
Véhicule à selle

(30) Priority: 11.07.2011 JP 2011153174; 11.07.2011 JP 2011153098; 11.07.2011 JP 2011153140
(43) Date of publication of application: 16.01.2013
(73) Proprietor: Honda Motor Co., Ltd., Tokyo 107-8556 (JP)
(72) Inventor: Nakabayashi, Shunichi, Saitama, 351-0193 (JP); Sakagami, Koji, Saitama, 351-0193 (JP); Katagiri, Kiyoshi, Saitama, 351-0193 (JP); Nakahira, Kota, Saitama, 351-0193 (JP); Yamamoto, Yoshikazu, Saitama, 351-0193 (JP); Okubo, Kiyoharu, Saitama, 351-0193 (JP)
(74) Representative: Beder, Jens

(56) References cited:
- WO-A1-2005/047093
- WO-A1-2008/049203
- GB-A- 2 433 236
- US-A1- 2006 060 405

## Description

### BACKGROUND OF THE INVENTION

### Field of the Invention

The present invention relates to an improvement in a saddle type vehicle. In addition, the present invention relates to a saddle type vehicle equipped with a side stand. Further, the present invention is directed to a saddle type vehicle design paying close attention to steps on which to position the rider's feet.

### Description of Background Art

A vehicle on which a rider sits astride a seat is called a saddle type vehicle. Motorcycles representative of saddle type vehicles are models constructed in a sport mode, a cruiser mode and other modes that have been put to practical use.

The sport mode is a mode in which the vehicle can travel at high speeds, the position of the vehicle's center of gravity (which means the position of the center of gravity of the vehicle as a whole or the position of the center of gravity of a drive source, here and hereafter) and the seat position are high, and the rider can take a forward-tilted posture, thereby reducing the airflow resistance and securing an agile maneuverability.

On the other hand, the cruiser mode is a mode in which the vehicle is good at medium-speed travel, the position of the vehicle's center of gravity and the seat position are low, the rider keeps his or her upper body comparatively upright, and the rider can have a stable maneuverability while keeping a relaxed riding posture.

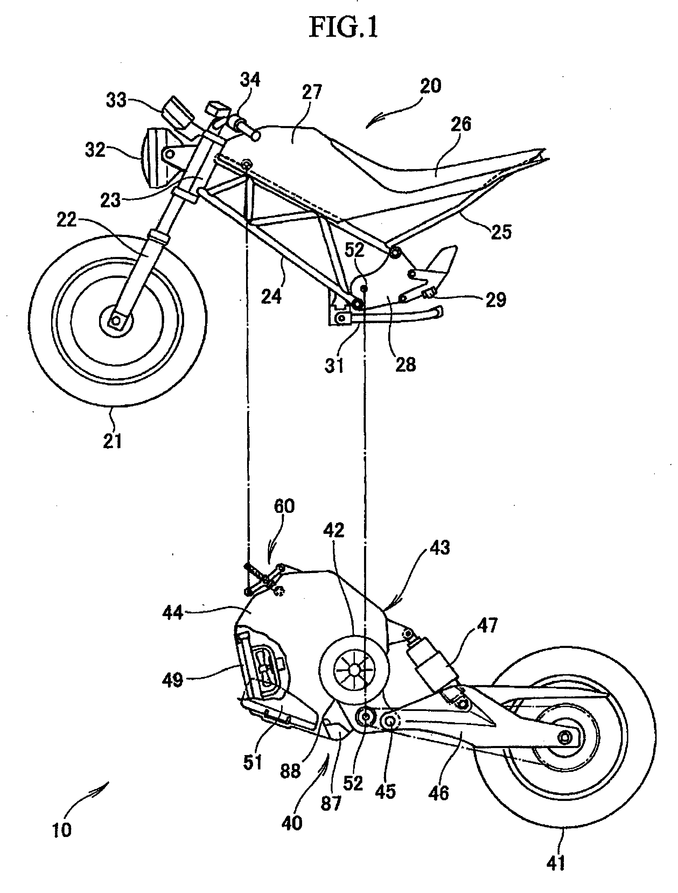

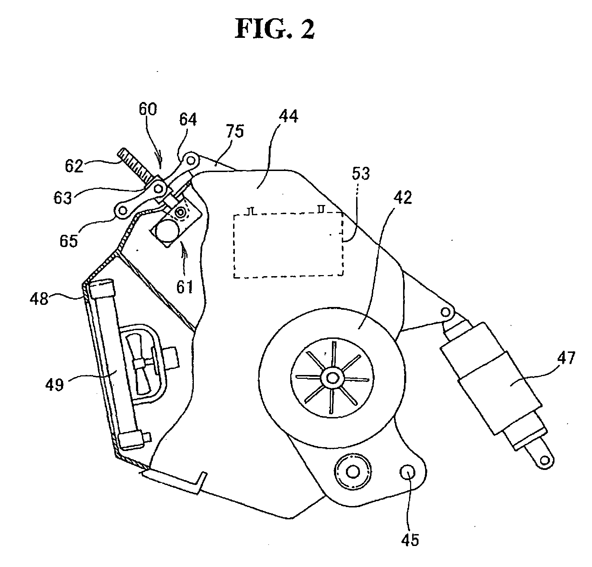

The sport mode and the cruiser mode differ in the form of a body frame or the like, and, in principle, a single vehicle cannot have both of these modes. However, a vehicle which is a single motorcycle and on which the user can change the riding posture according to the user's taste has been proposed. See, for example, FIGS. 1 and 2 of Japanese Patent Laid-Open No. 2008-81083.

A seat (15) shown in FIG. 2 of Japanese Patent Laid-Open No. 2008-81083 (the parenthesized numeral is a reference numeral used in Japanese Patent Laid-Open No. 2008-81083, here and below) is so configured that its height can be arbitrarily changed as indicated by (15), (15'), and (15") in FIG. 1 of Japanese Patent Laid-Open No. 2008-81083. Therefore, the riding posture can be changed easily.

In FIG. 2 of Japanese Patent Laid-Open No. 2008-81083, the form of a body frame (4) is not changed, although a seat (15) can be raised and lowered. The positions of an engine (25) and a transmission (26), which are heavy bodies, are also not changed. Therefore, the position of the center of gravity is not changed, although the rider's posture is changed. Accordingly, shifting the mode from a cruiser mode to a sport mode or vice versa is not possible.

However, if a single motorcycle (saddle type vehicle) permits an arbitrary change from a cruiser mode to a sport mode, the use of the vehicle is enlarged and the convenience in use of the vehicle is enhanced.

Referring to motorcycles of the saddle type, the motorcycles are normally equipped with stands for use at the time of parking. The stands put to practical use include two kinds of stands, namely, a center stand and a side stand. When the motorcycle is parked using the side stand, the motorcycle is in the state of being inclined toward the side stand side, in relation to the ground surface.

For adaptation to road surface conditions or for other purposes, it is required to control the inclination angle of the vehicle body during the use of the side stand. In view of this, a vehicle body inclination angle controller has been proposed. See, for example, FIG. 2 of Japanese Patent Laid-Open No. Sho 64-52582.

A side stand (2) shown in FIG. 2 of Japanese Patent Laid-Open No. Sho 64-52582 (the parenthesized numeral is a reference numeral used in Japanese Patent Laid-Open No. Sho 64-52582, here and below) includes an outer tube (30) and an inner tube (32). When a screw portion (40) is turned by a drive motor (9), a slide arm (41) is moved upward or downward. By the slide arm (41), the inner tube (32) is moved upward or downward, whereby the length of the side stand (2) is varied.

Thus, the outer tube (30) for guiding the inner tube (32), the drive motor (9), the screw portion (40), and the slide arm (41) are indispensable, so that the side stand (2) is complicated in structure, and is high in cost due to the large number of component parts.

From the viewpoint of utilization and spread of a vehicle body inclination angle controller, a stand structure which is simple in mechanism, includes a small number of component parts and can be restrained from rising in cost.

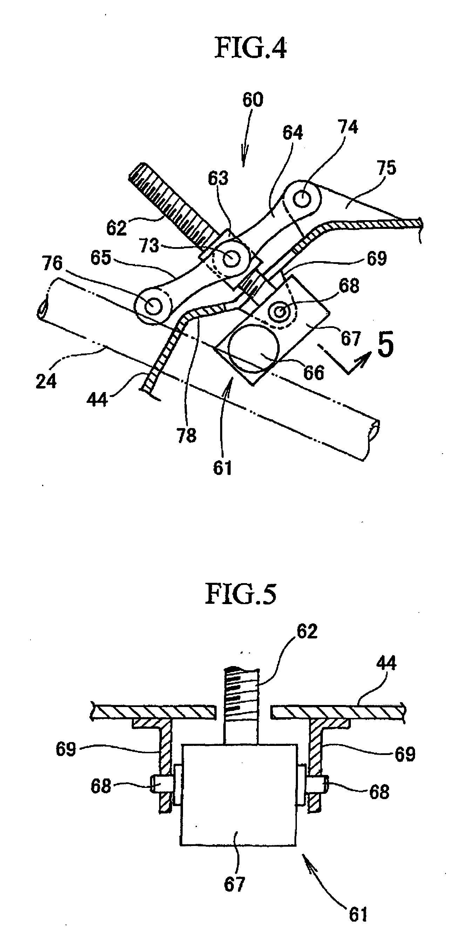

As a rider sits astride a seat a saddle type vehicle during operation, the rider places his/her feet on steps. The vehicle is provided with left and right steps. See, for example, FIGS. 1 and 4 of Japanese Patent Laid-Open No. 2009-227119.

FIG. 4 of Japanese Patent Laid-Open No. 2009-227119 is a bottom view, wherein on a lower surface of a power unit (50) (the parenthesized numeral is a reference numerals used in Japanese Patent Laid-Open No. 2009-227119, here and below), there is provided a step bar (42) that extends in the vehicle width direction with left and right steps (41,41) attached to both ends of the step bar (42).

As shown in FIG. 1 of Japanese Patent Laid-Open No. 2009-227119, the steps (41) are disposed on the lower side of a seat (29), between a front wheel (18) and a rear wheel (21). During traveling, the driver put the driver's feet on the steps (41) while sitting on the seat (29).

The positions of the steps (41) are determined uniquely. Even when the driver shifts the hip point on the seat (29) along the fore-and-aft direction of the vehicle, the positions of the steps (41) are unchanged. Accordingly, the driver cannot change the riding posture so much.

In this connection, there is a demand for a saddle type vehicle which permits the riding posture to be largely changed according to the driver's taste.

WO 2008/049203 A1 discloses a saddle vehicle comprising a first structure body and a second structure body.

### SUMMARY AND OBJECTS OF THE PRESENT INVENTION

It is an object of an embodiment of the present invention to provide a saddle type vehicle which permits an arbitrary change from a cruiser mode to a sport mode.

According to an embodiment of the present invention, a saddle type vehicle includes a front structure body and a rear structure body as main components, wherein the front structure body includes a body frame having a head pipe at a front portion thereof that extends in a vehicle fore-and-aft direction. A seat frame extends from a rear portion of the body frame with a seat supported by the seat frame. A front fork is steerably mounted to the head pipe with a steering handle mounted to an upper end of the head pipe. A front wheel is mounted to lower ends of the front fork. The rear structure body includes a rear wheel disposed behind on a rear side of the front wheel with a drive source operatively connected to the rear wheel. A support body is provided by which the drive source and the rear wheel are supported. The front structure body and the rear structure body are interlinked through a hinge portion so as to be bendable in a side view of the vehicle. A vehicle body form control mechanism is provided for controlling the vehicle body form by setting the bend of the front structure body and the rear structure body to an arbitrary angle in a side view of the vehicle, with the hinge portion as an axis.

According to an embodiment of the present invention, the saddle type vehicle includes the vehicle body form control mechanism that bends the front structure body and the rear structure body, with the hinge portion as an axis. Thus, the hinge portion angle is changed between a first line segment passing through the center of the hinge portion and being orthogonal to a steering shaft and a second line segment passing through the center of the hinge portion and through the center of the rear wheel.

According to an embodiment of the present invention, the saddle type vehicle is **characterized in that** the support body includes a drive source support case that supports the drive source, a swing arm that is vertically swingably mounted to the drive source support case through a pivot shaft and supports the rear wheel, and a rear shock absorber provided bridgingly between the swing arm and the drive source support case.

According to an embodiment of the present invention, the saddle type vehicle is **characterized in that** the vehicle body form control mechanism is a toggle mechanism including an actuator mounted to a drive source support case supporting the drive source or to the body frame; a screw shaft extending from the actuator and being rotated by the actuator; a nut positioned in screw engagement with the screw shaft; and a first link plate linked at its tip to the drive source support case and a second link plate linked at its tip to the body frame. The first and second link plates are swingably linked to the nut.

According to an embodiment of the present invention, the saddle type vehicle is **characterized in that** the drive source is an electric motor, and the drive source support case is provided with a traveling battery in which electrical energy to be supplied to the electric motor is stored.

According to an embodiment of the present invention, the saddle type vehicle is **characterized in that** the drive source is an internal combustion engine, and the drive source support case is provided with a fuel tank in which fuel to be supplied to the internal combustion engine is stored.

According to an embodiment of the present invention, the saddle type vehicle is **characterized in that** the actuator has an electric motor as a main component, and is mounted to the drive source support case.

According to an embodiment of the present invention, the saddle type vehicle is **characterized in that** an operating member for sending a normal/reverse rotation command to a control unit that controls the electric motor is added to the steering handle.

According to an embodiment of the present invention, the vehicle is divided into a front structure body and a rear structure body. The front structure body and the rear structure body are interlinked so as to be bendable in a side view of the vehicle, through a hinge portion. The bend angle is varied by the vehicle form control mechanism.

In other words, the vehicle body form can be arbitrarily changed from one to the other of a cruiser mode and a sport mode, by the vehicle body form control mechanism.

According to an embodiment of the present invention, while being a single vehicle, the vehicle is divided into modules of the front structure body and the rear structure body, and, by bending the front structure body and the rear structure body with the hinge portion as a center in side view of the vehicle, it is possible to simultaneously change not only the seat height but also minimum road clearance, the position of the vehicle's center of gravity, and the caster angle. As a result, a saddle type vehicle permitting a variety of forms to be created according to the rider's taste is provided.

In addition, when the bend angle is enlarged, the seat position is lowered, the center of gravity is lowered. Further, the wheel base is elongated, whereby a favorable cruiser mode can be obtained. When the bend angle is reduced, the seat position is raised, the center of gravity is raised, and, further, the wheel base is shortened, whereby a favorable sport mode can be obtained.

According to an embodiment of the present invention, the vehicle body form control mechanism is a mechanism by which the front structure body and the rear structure body are bent with the hinge portion as an axis so as to change the angle formed between the first line segment passing through the center of the hinge portion and being orthogonal to the steering shaft and the second line segment passing through the center of the hinge portion and through the center of the rear wheel.

Since the angle formed between the first line segment orthogonal to the steering shaft and the second line segment passing through the center of the rear wheel can be changed, the caster angle of the front wheel can be assuredly changed.

According to an embodiment of the present invention, the rear structure body is collectively provided with a drive source support case, a swing arm and a rear shock absorber. With the rear structure body thus configured as a module through the function of the support body, the bend angle formed between the front structure body and the rear structure body through the hinge portion in a side view of the vehicle can be easily changed.

According to an embodiment of the present invention, the vehicle body form control mechanism is a toggle mechanism. The toggle mechanism is a simple structure having the screw shaft, the nut and the link plates as components, and is inexpensive and light in weight.

According to an embodiment of the present invention, the drive source is an electric motor, and the drive source support case is provided with a traveling battery. Since the electric motor and the traveling battery are mounted to the same drive source support case, a feeder harness is shortened, and there is no fear that the feeder harness might be twisted or bent.

According to an embodiment of the present invention, the drive source is an internal combustion engine, and the drive source support case is provided with a fuel tank. Since the internal combustion engine and the fuel tank are mounted to the same drive source support case, a fuel supply hose is shortened, and there is no fear that the fuel supply hose might be twisted or bent.

According to an embodiment of the present invention, the actuator has an electric motor as a main component, and is mounted to the drive source support case. The actuator may be an oil hydraulic motor or a pneumatic motor, but an electric motor is more inexpensive, smaller in size and lighter in weight.

According to an embodiment of the present invention, an operating member for controlling the electric motor is added to the steering handle. Since the rider can make a mode change while sitting astride the seat, the convenience in use of the vehicle is improved.

It is an object of an embodiment of the present invention to provide a saddle type vehicle equipped with a stand of a vehicle body inclination angle variable type that has a simple mechanism and is composed of a small number of component parts. Thus, the stand can be produced with a low cost.

According to an embodiment of the present invention, a saddle type vehicle includes a side stand disposed between a front wheel and a rear wheel wherein a stand support portion is provided on a body frame with a stand bracket connected to the stand support portion through a first pin extending substantially along a longitudinal direction of a vehicle body and which swings in a vehicle width direction until making contact with one of a plurality of stoppers. A stand arm is connected to the stand bracket through a second pin (91) that swings from an upright position to a stored position.

According an embodiment of the present invention, the saddle type vehicle is a vehicle having a front structure body and a rear structure body as main components. The front structure body includes the body frame provided at its front portion with a head pipe that extends in a fore-and-aft direction of the vehicle. The side stand is provided at a lower portion of the body frame. A seat frame extends from a rear portion of the body frame with a seat supported by the seat frame. A front fork is steerably mounted to the head pipe with a steering handle mounted to an upper end of the front fork. The front wheel is mounted to lower ends of the front fork. The rear structure body includes the rear wheel disposed on the rear side of the front wheel with a drive source, disposed on the vehicle front side relative to the front wheel, for driving the rear wheel. A support body supports the drive source and the rear wheel. A first stopper and a second stopper are provided on the support body with the second stopper inclining the stand arm closer to the horizontal direction than the first stopper inclines the stand arm. The front structure body and the rear structure body are interlinked through a hinge portion so as to be bendable in a side view of the vehicle. A vehicle body form control mechanism is provided for controlling a vehicle body form by setting the bend of the front structure body and the rear structure body to an arbitrary angle in side view of the vehicle, with the hinge portion as an axis. Attendant on the control of the vehicle body form, the stand bracket is selectively placed in contact with the first stopper when the seat is in a high position, and the stand bracket is selectively placed in contact with the second stopper when the seat is in a low position.

According to an embodiment of the present invention, the saddle type vehicle is **characterized in that** the first stopper is provided at a vehicle-width-directionally side surface of the support body. The second stopper is provided at a slant surface inclined in a direction from an upper end of the first stopper toward the center of the vehicle width.

According to an embodiment of the present invention, the saddle type vehicle is **characterized in that** the first stopper is provided at a vehicle-width-directionally side surface of the support body, and the second stopper is provided at a depth surface of the support body, the depth surface being located on the vehicle body center side relative to the vehicle-width-directionally side surface.

According to an embodiment of the present invention, the saddle type vehicle is **characterized in that** the stand bracket has a pair of extension portions extending to the stand support portion, and is swingably engaged with the stand support portion in such a manner that the stand support portion is clamped between the extension portions.

According to an embodiment of the present invention, the saddle type vehicle is **characterized in that** the stand bracket has a single extension portion extending to the stand support portion, and is swingably engaged with the stand support portion in such a manner that the extension portion is nipped by the stand support portion.

According to an embodiment of the present invention, the stand arm is mounted to the stand bracket through the second pin so as to be swingable from an upright position to a stored position. Further, the stand bracket is mounted to the stand support portion through the first pin so as to be swingable in the vehicle width direction. The stand bracket is restricted in swinging by the stoppers. More specifically, with a plurality of stoppers being provided, the vehicle body inclination angle can be varied stepwise in stages corresponding to the number of the stoppers.

The mechanism for this purpose has the stand support portion, the stand bracket, the first and second pins, and the stand arm as major parts. The stand support portion, the second pin and the stand arm are included in a conventional side stand. By only adding the stand bracket and the first pin and the plurality of stoppers to this conventional structure, the stand according to this invention is completed.

According to an embodiment of the present invention, there is provided a saddle type vehicle equipped with a stand that does not need a drive motor, is simple in structure and can be restrained from rising in cost.

According to an embodiment of the present invention, the vehicle body form can be arbitrarily changed from one to the other of a cruiser mode and a sport mode by the vehicle body form control mechanism.

By providing the support body with the plurality of stoppers, the inclination angle of the stand can be changed interlockedly with a change in the vehicle body form.

According to an embodiment of the present invention, while being a single vehicle, the vehicle is divided into modules of the front structure body and the rear structure body, and, by bending the front structure body and the rear structure body with the hinge portion as a center in side view of the vehicle, it is possible to simultaneously change not only the seat height but also the minimum road clearance, the position of the vehicle's center of gravity, and the caster angle. As a result, a saddle type vehicle permitting a variety of forms to be created according to the rider's taste is provided.

According to an embodiment of the present invention, the second stopper is a slant surface provided in continuity with the upper end of the first stopper. The first stopper and the second stopper are provided in continuity.

According to an embodiment of the present invention, the second stopper is provided at the depth surface of the support body located on the vehicle body center side relative to the vehicle-width-directionally side surface. When the stand bracket makes contact with the depth surface, the pressing force of the stand bracket acts on the depth surface substantially perpendicularly. Since the frictional force increases, slipping at the contact surface is obviated.

According to an embodiment of the present invention, the stand bracket has a pair of extension portions extending to the stand support portion, and the stand support portion is clamped between the extension portions. Since the extension portions are provided in a pair, there is no fear of vibration of the stand bracket even when a torsional force is applied to the stand bracket.

According to an embodiment of the present invention, the stand bracket has a single extension portion extending to the stand support portion, and the extension portion is nipped by the stand support portion. Since the extension portion is single, rigidity of the stand bracket can be easily secured, and a stand bracket smaller in size can be realized.

It is an object of an embodiment of the present invention to provide a saddle type vehicle that permits the riding posture to be largely changed according to the driver's taste.

According to an embodiment of the present invention, a saddle type vehicle on which a rider sits astride a seat, includes rear steps disposed on lower sides of the seat wherein the rider can position the rider's feet. Front steps are disposed on a vehicle front side relative to the rear steps wherein the driver can position the driver's feet. The driver is permitted to selectively use the rear steps and the front steps. The front steps are tiltable steps so that they can be placed in a stored state when not used.

According to an embodiment of the present invention, the saddle type vehicle includes a front structure body and a rear structure body as main components. The front structure body includes a body frame provided at its front portion with a head pipe that extends in a fore-and-aft direction of the vehicle. The rear steps are provided at rear portions of the body frame. A seat frame extends from the body frame with the seat supported by the seat frame. A front fork is steerably mounted to the head pipe with a steering handle mounted to an upper end of the front fork. A front wheel is mounted to lower ends of the front fork. The rear structure body includes a rear wheel disposed rearwardly of the front wheel with a drive source, disposed on the vehicle front side relative to the rear wheel, for driving the rear wheel. A support body supports the drive source and the rear wheel. The front steps are provided at lower portions of the support body. The front structure body and the rear structure body are interlinked through a hinge portion so as to be bendable in a side view of the vehicle. A vehicle body form control mechanism is provided for controlling a vehicle body form by setting the bend of the front structure body and the rear structure body to an arbitrary angle in side view of the vehicle, with the hinge portion as an axis.

According to an embodiment of the present invention, the saddle type vehicle includes the front step with a tread plate on which to position the foot. A tread plate support shaft extends in a fore-and-aft direction of the vehicle and by which the tread plate is swingably attached to the support body. A clip mechanism is provided between the tread plate and the support body and by which the tread plate is fixed in a use position and a non-use position.

According to an embodiment of the present invention, when the seat of the saddle type vehicle is adjusted to a high position by the vehicle body form control mechanism, the rear steps are used. In this state, the front steps are placed in the stored state.

According to an embodiment of the present invention, when the seat of the saddle type vehicle is adjusted to a low position by the vehicle body form control mechanism, the front steps are used. In this state, the rear steps are placed in the stored state.

According to an embodiment of the present invention, the vehicle is provided with the front steps and the rear steps.

When the driver bends forward hoping for a sport-mode traveling, it suffices for the driver to place the driver's feet on the rear steps. When the driver keeps the upper body upright hoping for a cruise-mode traveling, it suffices for the driver to place the driver's feet on the front steps. The front steps can be placed in a stored state when not used.

According to an embodiment of the present invention, there is provided a saddle type vehicle that permits the riding posture to be largely changed according to the driver's taste.

According to an embodiment of the present invention, the vehicle body form can be changed from a cruiser mode to a sport mode by the vehicle body form control mechanism.

According to an embodiment of the present invention, while being a single vehicle, the vehicle is divided into modules of the front structure body and the rear structure body. By bending the front structure body and the rear structure body with the hinge portion as a center in side view of the vehicle, it is possible to simultaneously change not only the seat height but also the minimum road clearance, the position of the vehicle's center of gravity, and the caster angle. As a result, a saddle type vehicle is provided that permits a variety of forms to be created according to the rider's taste.

According to an embodiment of the present invention, the tread plates of the front steps are each fixed in a use position and a non-use position by the clip mechanism. The clip mechanism, naturally, is simple in structure.

According to an embodiment of the present invention, when the seat is adjusted to a high position, the rear steps are used, whereas the front steps are placed in the stored state. By sitting on the seat set to the high position and putting the driver's feet on the rear steps, the driver can enjoy traveling at a high-speed.

According to an embodiment of the present invention, when the seat is adjusted to a low position, the front steps are used, whereas the rear steps are placed in the stored state. By sitting on the seat set to the low position and putting the driver's feet on the front steps, the driver can enjoy a medium-speed traveling.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is an exploded view of a saddle type vehicle according to the present invention;
FIG. 2 is an enlarged view of a major part of FIG. 1;
FIG. 3 is a left side view of the saddle type vehicle;
FIG. 4 is a sectional view of a vehicle body form control mechanism according to the present invention;
FIG. 5 is a sectional view taken along line 5 of FIG. 4;
FIG. 6 is a layout view of an operating member;
FIG. 7 is a perspective view of the vehicle body form control mechanism;
FIGS. 8(a) and 8(b) show operational views of the vehicle body form control mechanism;
FIG. 9 is an operation view of FIG. 4;
FIGS. 10(a) and 10(b) show operation views of the saddle type vehicle;
FIG. 11 is a view showing a modification of FIG. 2;
FIG. 12 is an enlarged view of a major part of FIG. 1;
FIG. 13 is a view showing a modification of FIG. 12;
FIG. 14 is an exploded perspective view of a side stand according to the present invention;
FIG. 15 is an operation view of the side stand in a sport mode;
FIG. 16 is an operation view of the side stand in a cruiser mode;
FIG. 17 is a view showing a modification of FIG. 15;
FIG. 18 is a view showing a modification of FIG. 16;
FIG. 19 is a view showing a modification of FIG. 14;
FIG. 20 is an exploded perspective view of a front step according to the present invention;
FIG. 21 is a sectional view of a major part of the front step;
FIGS. 22(a) and 22(b) show operational views of the front step; and
FIG. 23 illustrates operational views of the saddle type vehicle.

### DETAILED DESCRIPTION OF THE PREFERRED EMBODIMENTS

A mode for carrying out the present invention will be described below, based on the accompanying drawings. An embodiment of the present invention will be described based on the drawings.

As shown in FIG. 1, a saddle type vehicle 10 has a front structure body 20 including a front wheel 21 and a rear structure body 40 including a rear wheel 41 as main components. The front structure body 20 and the rear structure body 40 are interconnected through a hinge portion 52 so as to be bendable in side view of the vehicle. Control of the bending is carried out by a vehicle body form control mechanism 60 provided bridgingly between the rear structure body 40 and the front structure body 20.

The front structure body 20 includes a front fork 22 that supports the front wheel 21 having a body frame 24 that is provided at a front portion thereof with a head pipe 23 supporting the front fork 22 and extends in the vehicle fore-and-aft direction. A seat frame 25 extends obliquely upwardly from a rear portion of the body frame 24 with a seat 26 supported by the seat frame 25. A body cover 27 extends toward the vehicle front side from a front portion of the seat 26 and covers the body frame 24. Rear plates 28 are provided at rear portions of the body frame 24 with rear steps 29 attached to rear portions of the rear plates 28. A stand 31 is provided at a rear lower portion of the body frame 24. A headlamp 32 and meters 33 are mounted to an upper portion of the front fork 22. A steering handle 34 is mounted to the upper end of the front fork 22 with the front wheel 21 mounted to the lower ends of the front fork 22.

The rear structure body 40 includes the rear wheel 41 with a drive source 42 that is disposed on the vehicle front side relative to the rear wheel 41 for driving the rear wheel 41 and a support 43 for supporting the drive source 42 and the rear wheel 41. The drive source 42 is preferably an electric motor, but may be an internal combustion engine such as a gasoline engine.

The support body 43 includes, for example, a drive source support case 44 that supports the drive source 42 with a swing arm 46 that is vertically swingably mounted to the drive source support case 44 through a pivot shaft 45 and supports the rear wheel 41. A rear shock absorber 47 is provided bridgingly between the swing arm 46 and the drive source support case 44.

As shown in FIG. 2, the drive source support case 44 is a hollow case, and is preferably an aluminum die casting, taking into account a reduction in weight. The drive source 42 is an electric motor. In the drive source support case 44, a traveling battery 53 in which electrical energy to be supplied to the electric motor 42 is stored is contained together with the electric motor 42.

Since the electric motor 42 and the traveling battery 53 are mounted to the same drive source support case 44, a feeder harness is shortened, and there is no fear that the feeder harness might be twisted or bent.

Furthermore, a front wall 48 of the drive source support case 44 is hollowed out, and a radiator 49 for cooling the electric motor 42 is disposed in the hollow portion.

As shown in FIG. 1, the rear steps 29 are attached to the rear plates 28 on the front structure body 20 side, whereas front steps 51 are attached to the drive source support case 44 on the rear structure body 40 side.

The front structure body 20 and the rear structure body 40 are interlinked through the hinge portion 52. The vehicle body form control mechanism 60 provided in the rear structure body 40 is bridgingly connected onto the front structure body 20, whereby the saddle type vehicle is completed.

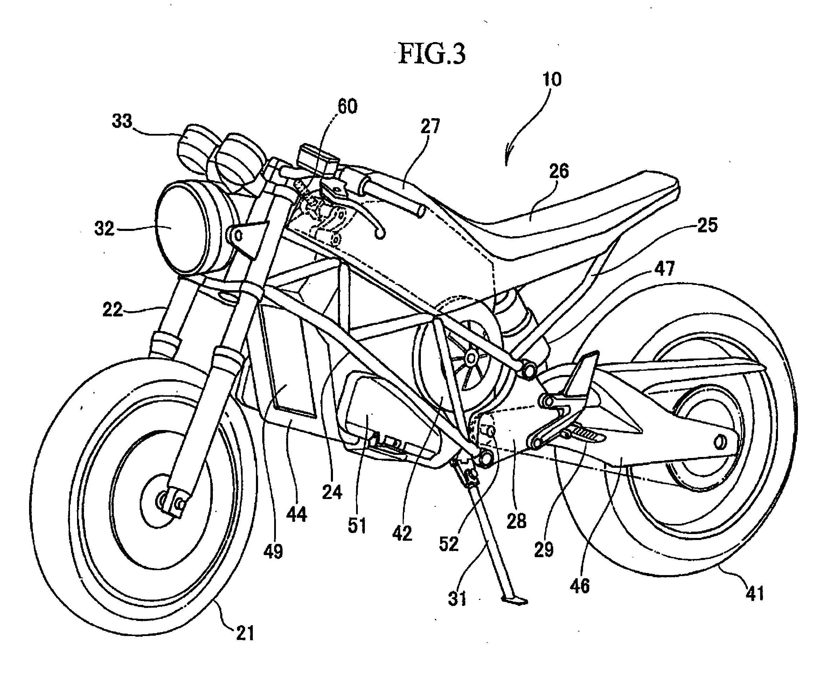

FIG. 3 is a final drawing of the saddle type vehicle. The saddle type vehicle has no difference from an ordinary motorcycle in external appearance. The same reference numerals as in FIG. 1 will be applied to the following description, and detailed explanations of the reference signs are omitted.

The vehicle body form control mechanism 60 covered by the body cover 27 will be detailed below.

As shown in FIG. 4, the vehicle body form control mechanism 60 is a toggle mechanism including an actuator 61 mounted to the drive source support case 44 with a screw shaft 62 extended from the actuator 61 and rotated by the actuator 61. A nut 63 is placed in screw engagement with the screw shaft 62. First link plates 64 are linked at their tips to the drive source support case 44 and second link plates 65 are linked at their tips to the body frame 24. The first and second link plates 64, 65 are swingably linked to the nut 63.

While the actuator 61 is mounted to the drive source support case 44 in this embodiment, it may be mounted to the body frame 24 side.

The actuator 61 includes an electric motor 66, and a reduction gear 67 for reducing the rotational speed of the electric motor 66. The actuator 61 may be an electric motor with a reduction gear incorporated in an electric motor case. In the alternative, the actuator 61 may be an oil hydraulic actuator having an oil hydraulic motor as a main component.

As shown in FIG. 5, left and right support shafts 68, 68 extend from the reduction gear 67. The support shafts 68, 68 are swingably supported on brackets 69, 69 extending from an inner surface of the drive source support case 44. As a result, the actuator 61 is incorporated in, and is swingably supported on, the drive source support case 44.

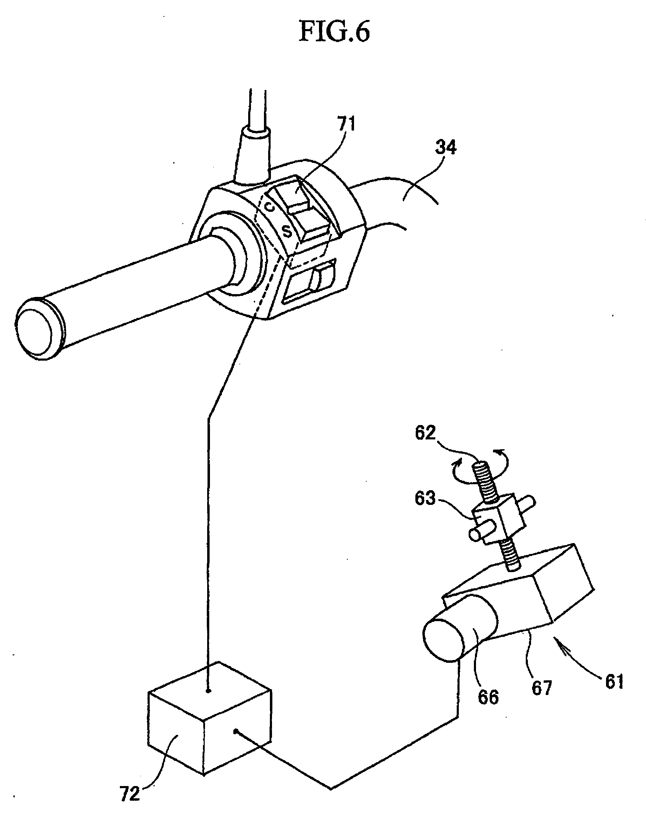

As shown in FIG. 6, the steering handle 34 is provided with an operating member 71 such as a seesaw type switch. The operating member 71 is switched over, for example by the driver's left thumb, to C (cruiser mode) or S (sport mode). In response to this, a control unit 72 applies normal-rotation or reverse-rotation control to the electric motor 66. As a result, the screw shaft 62 is rotated, and the nut 63 is moved upward or downward. The operating member 71 is not restricted to the seesaw type switch, and it may be of any kind insofar as it is an ON/OFF type switch.

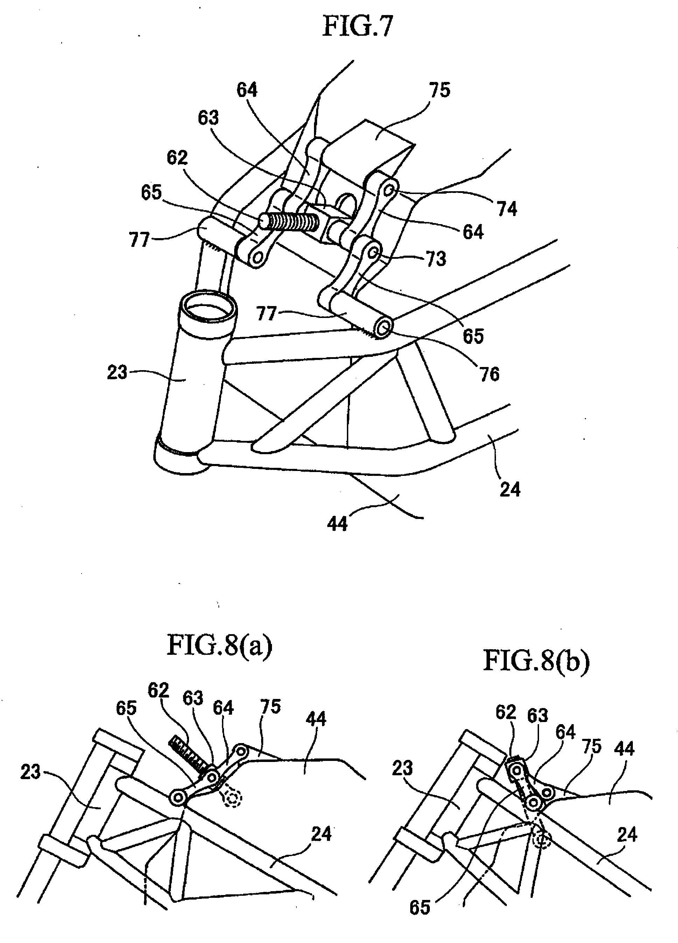

As shown in FIG. 7, the second link plates 65 are swingably linked to the body frame 24. More specifically, from the nut 63 that is moved on the screw shaft 62, and through pins 73, the first link plates 64 extend upward and the second link plates 65 extend downward. The tips of the first link plates 64 are swingably fixed to a bracket 75 on the drive source support case 44 side through a pin 74, whereas the tips of the second link plates 65 are swingably fixed to pipes 77 on the body frame 24 side through pins 76.

Operations of the vehicle body form control mechanism 60 will be described based on FIG. 8(a) and 8(b).

FIG. 8(a) shows the position of the nut 63 corresponding to the sport mode. The first and second link plates 64 and 65 are wide spread.

When the nut 63 is moved upward by the actuator, the first and second link plates 64 and 65 having been wide spread are folded into a V-shape, as shown in FIG. 8(b); consequently, the bracket 75 approaches the body frame 24.

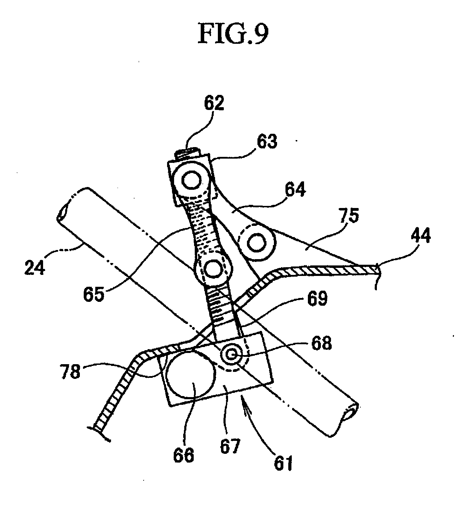

In addition, the inclination of the screw shaft 62 is changed, as shown in FIGS. 8(a) and 8(b). This change will be described referring to FIGS. 4 and 9.

The reduction gear 67 shown in FIG. 4 is turned clockwise in the figure, with the support shafts 68 as a center. The drive source support case 44 is provided with a pocket portion 78, in the vicinity of the reduction gear 67. The pocket portion 78 is formed by locally bulging the drive source support case 44 to the outside.

As shown in FIG. 9, the reduction gear 67 having been turned about the support shaft 68 is contained in the pocket portion 78.

By locally bulging the drive source support case 44 without broadening it as a whole, it is possible both to contain the actuator 61 (which is swung) and to make the drive source support case 44 compact.

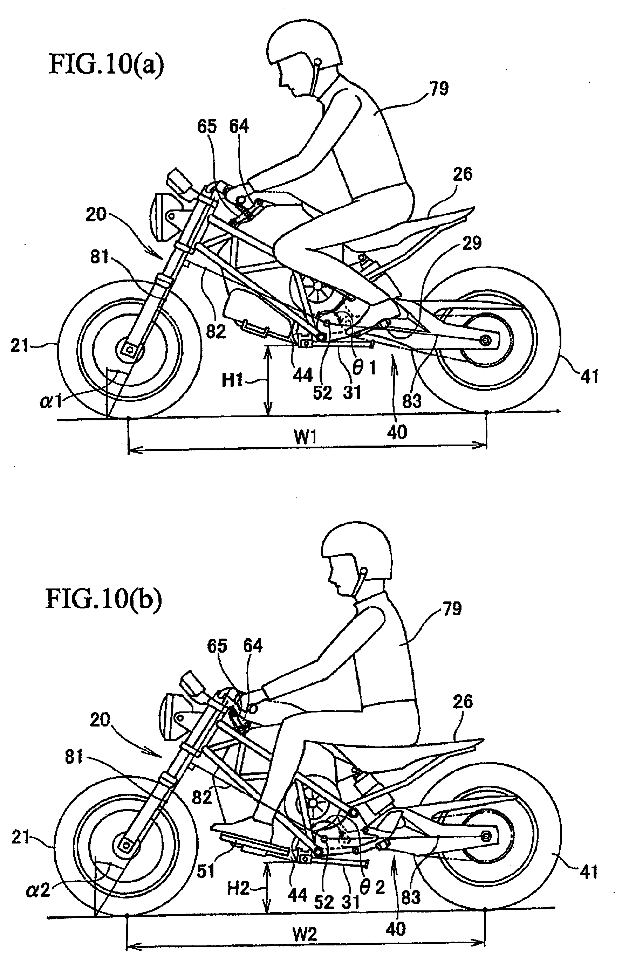

As shown in FIG. 10(a), in the sport mode, a rider 79 rides the vehicle in a forward-tilted posture. The road clearance of the drive source support case 44 is H1.

The first and second link plates 64 and 65 are wide spread. The bend angle 61 formed between a first line segment 82 passing through the center of the hinge portion 52 and being orthogonal to a steering shaft 81 and a second line segment 83 passing through the center of the hinge portion 52 and through the center of the rear wheel 41 is a little less than 180°.

When the first and second link plates 64 and 65 are folded into a V-shape, starting from the just-mentioned state, the rear structure body 40 is turned counterclockwise in the figure, about the axis of the hinge portion 52. In addition, the front structure body 20 is turned clockwise in the figure, also about the axis of the hinge portion 52.

Upon this change, as shown in FIG. 10(b), the bend angle θ2 between the first line segment 82 and the second line segment 83 is reduced. In conjunction with this, the caster angle α2 in FIG. 10(b) is made greater than the caster angle α1 in FIG. 10(a). For example, the caster angle α1 is 26°, which is suitable for the cruiser mode, while the caster angle α2 is 30°, which is suitable for the sport mode.

As a result, the wheel base W2 in FIG. 10(b) is made greater than the wheel base W1 in FIG. 10(a).

As compared with the condition in FIG. 10(a), the road clearance H2 of the drive source support case 44 in (b) is reduced (H2 < H1), and the position of the center of gravity is lowered in FIG. 10(b). Simultaneously, the position of the seat 26 is lowered. Consequently, FIG. 10(b) corresponds to the cruiser mode, in which the rider 79 rides in a posture of keeping the upper body upright.

Thus, the vehicle body form can be arbitrarily changed from one to the other of the cruiser mode and the sport mode, by the vehicle body form control mechanism.

According to the present invention, while being a single vehicle, the vehicle is divided into modules of the front structure body and the rear structure body, and, by bending the front structure body and the rear structure body with the hinge portion as a center in side view of the vehicle, it is possible to simultaneously change not only the seat height but also minimum road clearance, the position of the vehicle's center of gravity, and caster angle. Therefore, a saddle type vehicle permitting a variety of forms to be created according to the rider's taste is provided.

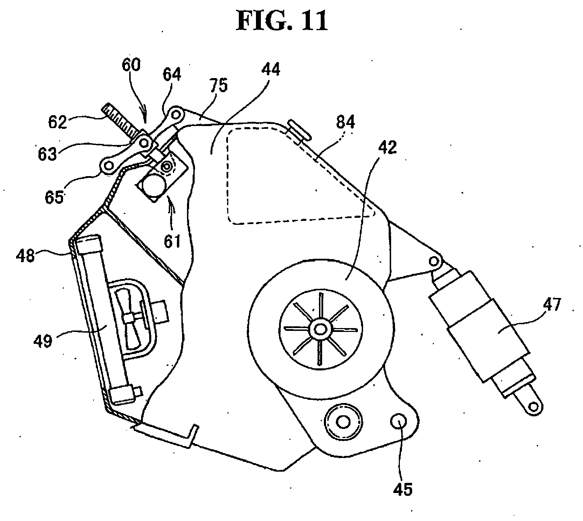

FIG. 11 is a view showing a modification of FIG. 2, in which the drive source support case 44 is a hollow case, and is preferably an aluminum die casting, taking into account a reduction in weight. The drive source 42 is an internal combustion engine. In the drive source support case 44, a fuel tank 84 in which a fuel to be supplied to the internal combustion engine 42 is stored is contained together with the internal combustion engine 42.

Since the internal combustion engine 42 and the fuel tank 84 are mounted to the same drive source support case 44, a fuel supply hose is shortened, and there is no fear of twisting or bending of the fuel supply hose.

Furthermore, the front wall 48 of the drive source support case 44 is hollowed out, and the radiator 49 for cooling the internal combustion engine 42 is disposed in the hollow portion.

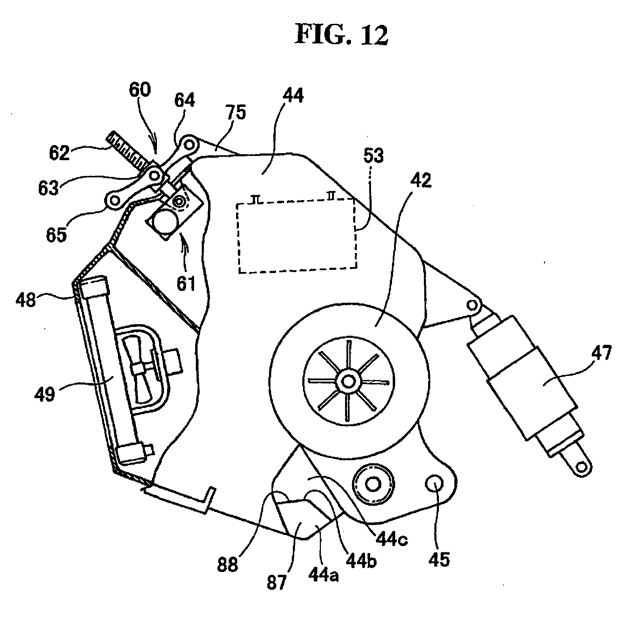

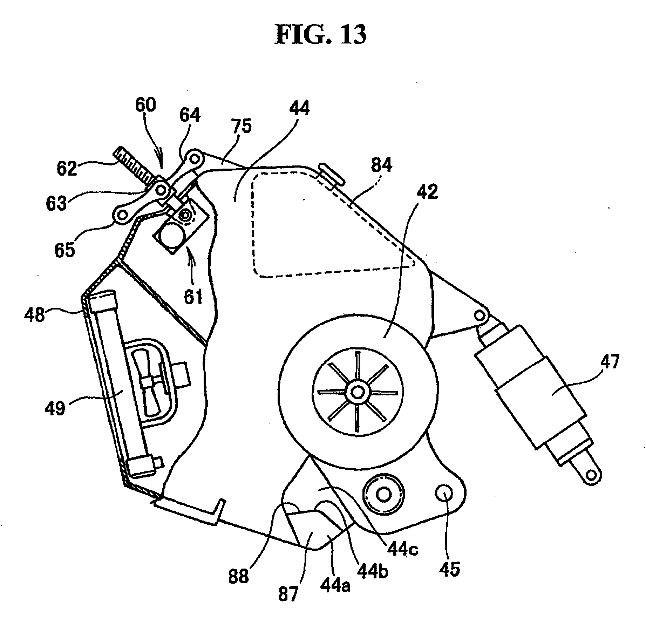

FIGS. 13 is a view showing a modification of FIG. 12, in which the drive source support case 44 is a hollow case, and is preferably an aluminum die casting, taking into account a reduction in weight. The drive source 42 is an internal combustion engine. In the drive source support case 44, a fuel tank 84 in which a fuel to be supplied to the internal combustion engine 42 is stored is contained together with the internal combustion engine 42.

Since the internal combustion engine 42 and the fuel tank 84 are mounted to the same drive source support case 44, a fuel supply hose is shortened, and there is no fear of twisting or bending of the fuel supply hose.

Furthermore, the front wall 48 of the drive source support case 44 is hollowed out, and the radiator 49 for cooling the internal combustion engine 42 is disposed in the hollow portion. Similar reference numerals are used in FIG. 12.

Meanwhile, as compared with the condition in FIG. 10(a), the road clearance H2 of the drive source support case 44 in FIG. 10(b) is reduced (H2 < H1). The side stand 31 for use at the time of parking has to be made to correspond to this change.

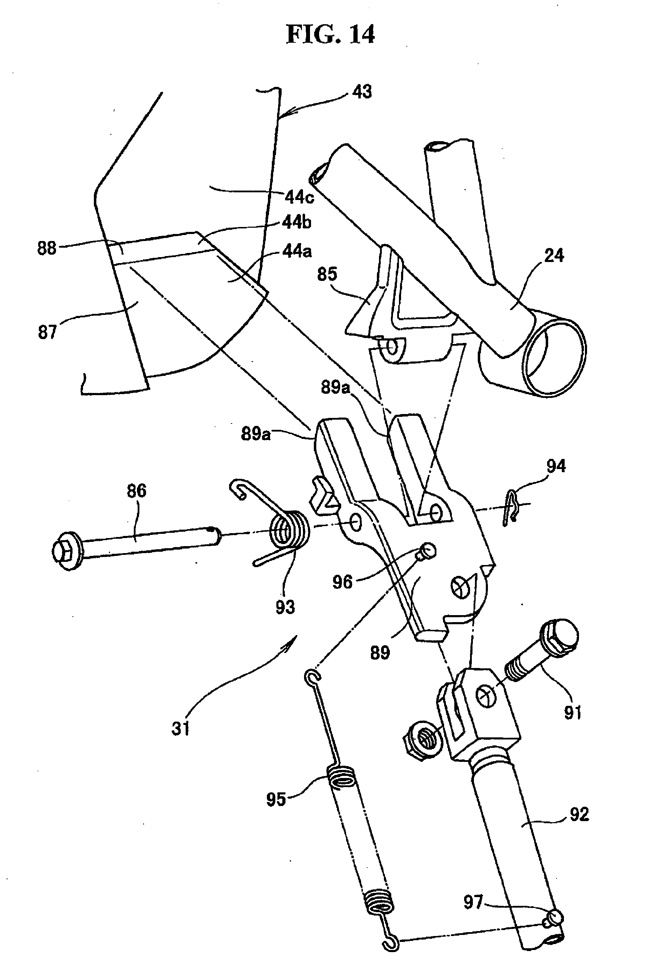

As shown in FIG. 14, the side stand 31 includes a stand support portion 85 extending down from the body frame 24; a stand bracket 89 that is connected to the stand support portion 85 through a first pin 86 extending substantially along the longitudinal direction of the vehicle and which is swung in the vehicle width direction until making contact with one of a plurality of stoppers (in this example, a first stopper 87 and a second stopper 88). A stand arm 92 is connected to the stand bracket 89 through a second pin 91 and is swung from an upright position to a stored position. A first elastic member 93 biases the stand bracket 89 so that a pair of extension portions 89a, 89a extending obliquely upwardly from the stand bracket 89 are pressed against the first stopper 87 or the second stopper 88. A second elastic member 95 is disposed bridgingly between the stand bracket 89 and the stand arm 92 for holding the stand arm 92 in the upright position or the stored position.

The first elastic member 95 is preferably a torsion spring, while the second elastic member 95 is preferably a helical extension spring.

The second elastic member 93 is locked at its upper end onto an upper lock portion 96 erected on the stand bracket 89, and is locked at its lower end onto a lower lock portion 97 erected on the stand arm 92. The upper lock portion 96 and the lower lock portion 97 are each preferably a pin.

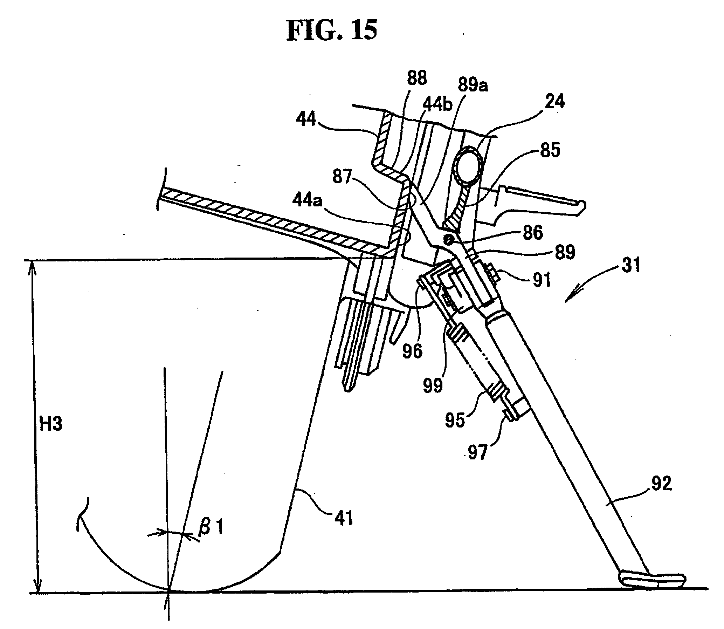

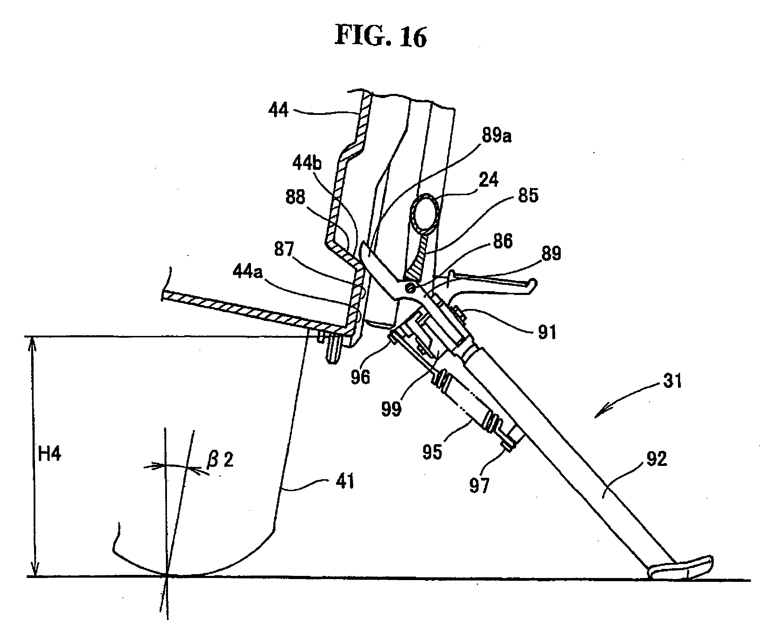

In addition, the upper lock portion 96 and the lower lock portion 97 may be extended to the reverse side (the vehicle body center side) as compared with the figure. A specific example of this will be shown in FIGS. 15 and 16 described later.

The stand bracket 89 is connected to the stand support portion 85, which integrally belongs to the body frame 24, by use of the first pin 86. A click pin 94 is inserted into the tip of the first pin 86, so as to prevent the first pin 86 from slipping off. The stand arm 92 is connected to the stand bracket 89 by use of the second pin 91. By the above-mentioned steps, the side stand 31 in the present invention is completed.

As the spacing between the extension portion 89a and the extension portion 89a is greater, the stand bracket 89 is less liable to be vibrated. More specifically, since the extension portions 89a, 89a are provided in a pair, there is no fear of vibration of the stand bracket 89 even when a torsional force is exerted on the stand bracket 89.

As has been described above, the side stand 31 has the stand support portion 85, the stand bracket 89, the first and second pins 86, 91 and the stand arm 92 as major parts.

The stand support portion 85, the second pin 91 and the stand arm 92 are included in the conventional side stand. By only adding the stand bracket 89 and the first pin 86 and the plurality of stoppers 87, 88 to this conventional side stand, the side stand 31 in the present invention is completed.

According to the present invention, there is provided a saddle type vehicle equipped with a stand which does not need a drive motor, is simple in structure and can be restrained from being raised in cost.

Now, the operation of the side stand 31 will be described below.

In FIG. 15, the upper lock portion 96 and the lower lock portion 97 extend to the vehicle body center side (namely, in the reverse direction to that in FIG. 14) (the same applies to FIGS. 16 to 18, as well).

A side stand switch 99 is provided on the vehicle body center side relative to the first pin 86. The side stand switch 99 is a switch which inhibits starting of the engine when the side stand 31 is in a use state (upright state) and which permits starting of the engine when the side stand 31 is in a non-use state (stored state).

As shown in FIG. 15, the drive source support case 44 as a major part of the support body (FIG. 1, reference sign 43) is formed with the first stopper 87 and the second stopper 88.

The first stopper 87 is formed at a side surface 44a of the drive source support case 44.

The second stopper 88 is provided at a slant surface 44b inclined obliquely upward from the upper end of the first stopper 87 (side surface 44a) toward the vehicle body center.

The first stopper 87 and the second stopper 88 are provided in continuity with each other. The first stopper 87 and the second stopper 88 can be easily formed by bending a single sheet. While the number of the stopper is two in this example, the number of the stoppers may be three or more.

The road clearance H3 of the drive source support case 44 corresponds to the road clearance H1 in FIG. 10(a). In other words, FIG. 10(a) shows a sport mode, wherein the extension portions 89a make contact with the first stopper 87. More specifically, while the stand bracket 89 swings with the first pin 86 as a center, the swing is limited by the first stopper 87, and a desired vehicle body inclination angle (the angle formed between a vertical line and the vehicle body center line, here and below) β1 is obtained.

FIG. 10(b) shows a cruiser mode, wherein the road clearance of the drive source support case 44 has a small value of H2.

In this instance, as shown in FIG. 16, the road clearance of the drive source support case 44 has a small value of H4 (where H4 < H3). While the vehicle body frame 24 and the first pin 86 are both lowered attendantly on the mode change, the drive source support case 44 is lowered more. As a result, the drive source support case 44 is lowered relative to the first pin 86.

In this case, the extension portions 89a each move from a position on the first stopper 87 to a position on the second stopper 88 while sliding. Thus, the extension portions 89a make contact with the second stopper 88. While the stand bracket 89 swings with the first pin 86 as a center, the swing is limited by the second stopper 88, whereby a desired vehicle body inclination angle β2 is obtained. The relationship of β2 with β1 in FIG. 13 is β2 ≤ β1.

Now, a modification of FIGS. 14 to 16 will be described below, based on the drawings.

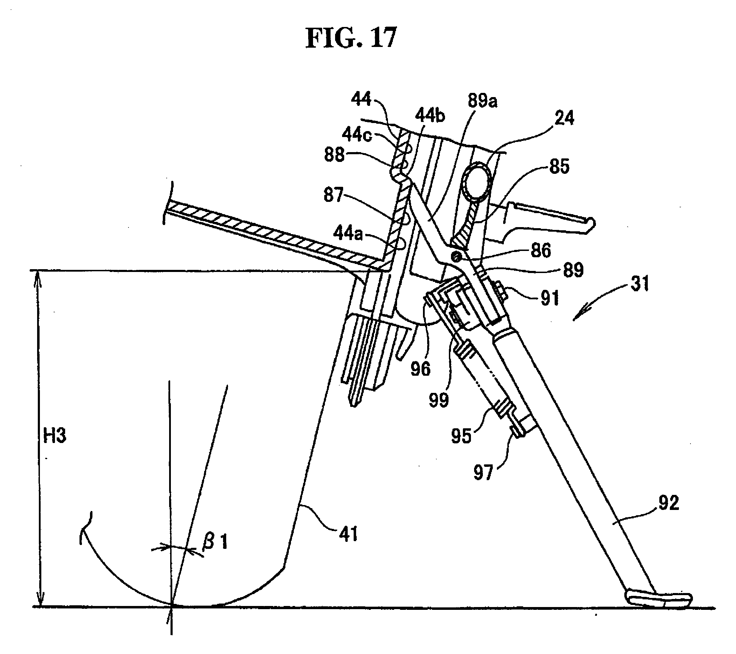

FIG. 17 shows a modification of FIG. 15, wherein the extension portions 89a of the stand bracket 89 is elongated, the slant surface 44b provided on the drive source support case 44 is shortened, a depth surface 44c is extended upwardly from the upper end of the slant surface 44b, and the second stopper 88 is provided at the depth surface 44c. In other points, FIG. 17 is the same as FIG. 15; therefore, the reference numerals used in FIG. 15 are applied also to FIG. 17, and explanations of the reference numerals are omitted. Thus, in FIG. 17, the extension portions 89a make contact with the first stopper 87 provided at the side surface 44a, like in FIG. 15.

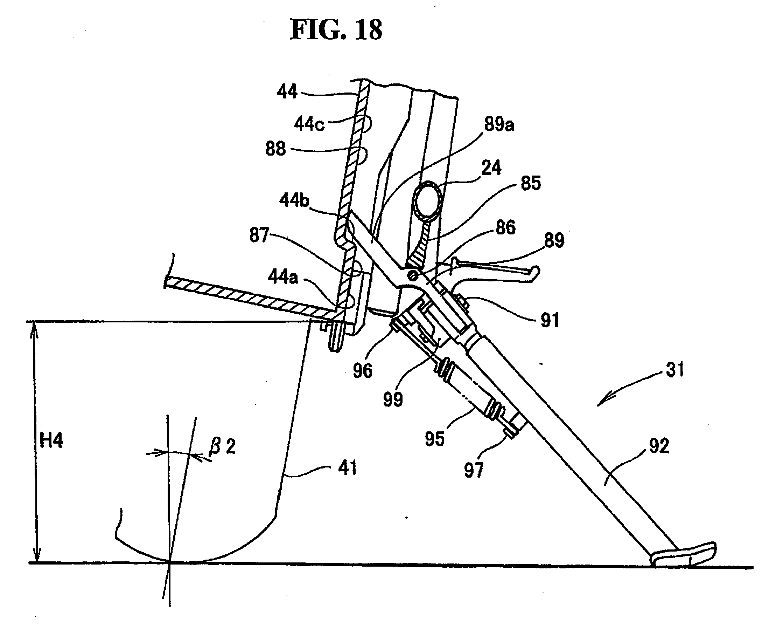

FIG. 18 shows a modification of FIG. 16. When the drive source support case 44 is lowered attendantly on the mode change, the tips of the extension portions 89a come into contact with the second stopper 88 provided at the depth surface 44c. In other points, FIG. 18 is the same as FIG. 16; therefore, reference numerals used in FIG. 16 are applied also to FIG. 18, and explanations of the reference numerals are omitted.

When the extension portions 89a of the stand bracket 89 make contact with the depth surface 44c, the pressing force of the stand bracket 89 acts on the depth surface 44c substantially perpendicularly. Since the frictional force increases, slipping on the contact surface is obviated.

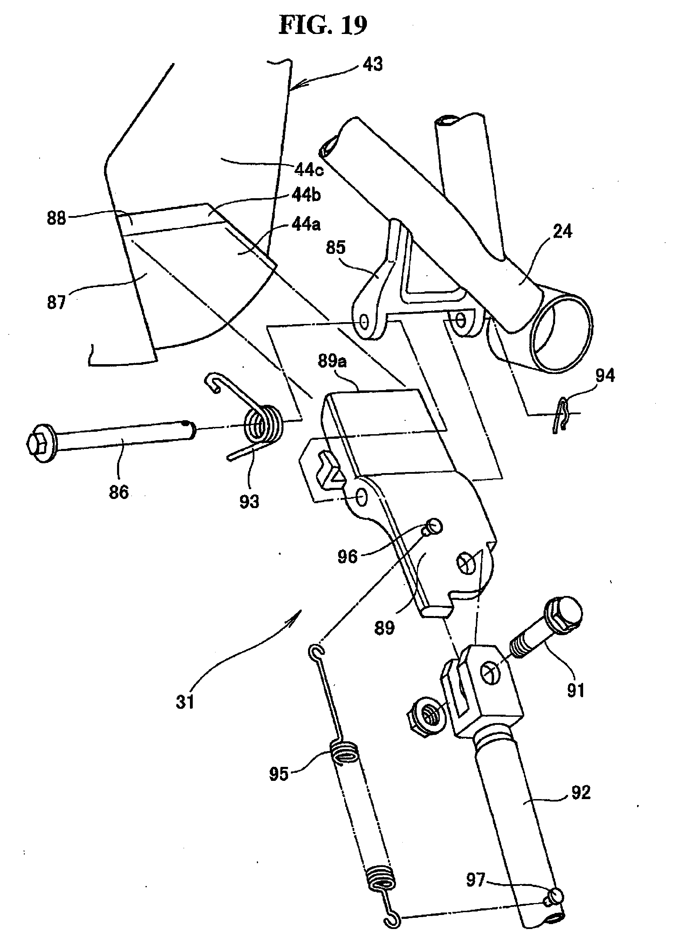

FIG. 19 shows a modification of FIG. 12, wherein a single extension portion 89a was extended from the stand bracket 89. The extension portion 89a is increased in width, and rigidity is increased accordingly. The stand support portion 85 is bifurcated. With the first pin 86 inserted after the extension portion 89a is set in position. Therefore, the stand bracket 89 can be swingably engaged with the stand support portion 85. In other points, FIG. 19 is the same as FIG. 14; therefore, the reference numerals used in FIG. 14 are applied also to FIG. 19, and explanations of them are omitted.

Now, the structure and operation of the front step 51 will be described in detail below.

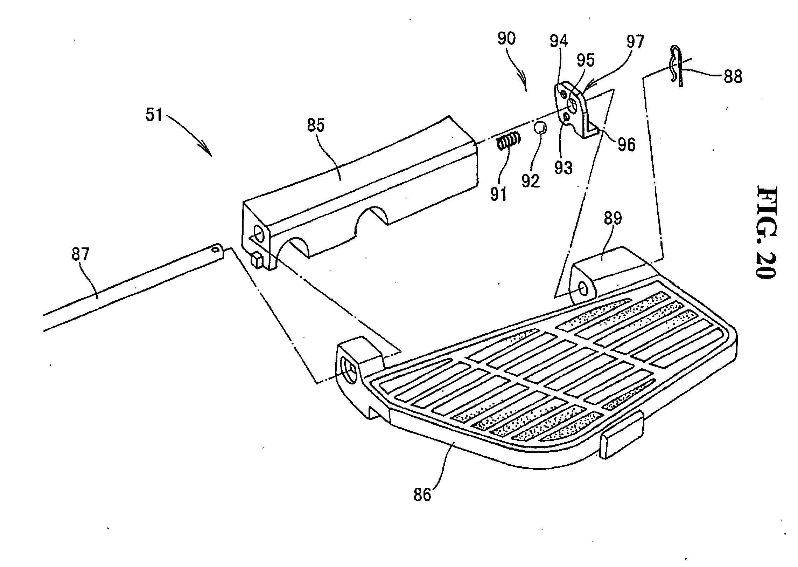

As shown in FIG. 20, the front step 51 includes a support block 85 provided on the vehicle body side, a tread plate 86 provided on its upper surface with a rubber or rigid resin with a tread plate support shaft 87 extending in the fore-and-aft direction of the vehicle and by which the tread plate 86 is swingably attached to the support block 85. A clip 88 is fitted to the tip of the tread plate support shaft 87 wherein the tread plate support shaft 87 is prevented from slipping off. A clip mechanism 90 is provided between the support block 85 and the tread plate 86 and by which the tread plate 86 is fixed in a use position and a non-use position.

The clip mechanism 90 includes, for example, a spring 91, a ball 92 biased by the spring 91, and a click plate 97 provided with a first click hole 93 and a second click hole 94 in which the ball 92 is to be fitted, with a through-hole 95 through which the tread plate support shaft 87 can pass, and with an anti-turning piece 96. The click mechanism 90 is inexpensive and simple in structure.

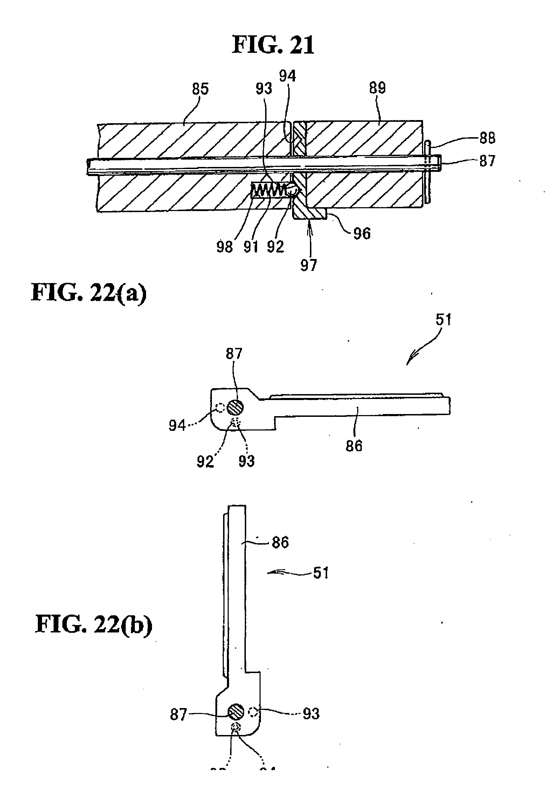

As shown in FIG. 21, the click plate 97 is placed between one end of the support block 85 and an arm portion 89 on the tread plate side. Since the anti-turning piece 96 is caught on the arm portion 89, the click plate 97 is rotated together with the arm portion 89.

On the other hand, the support block 85 is provided at its one end with a spring storing hole 98, in which the spring 91 is stored. The spring 91 presses the ball 92 against the click plate 97.

As shown in FIG. 22(a), when the front step 51 is in a use state, the ball 92 is fixed by being fitted in the first click hole 93, whereby the tread plate 86 is prevented from fluctuating. Then, when the tip of the tread plate 86 is lifted up by hand, the lifting-up force surpasses the click force, resulting in the tread plate 86 being rotated counterclockwise in the FIG. 22(a) by about 90°.

As shown in FIG. 22(b), when the front step 51 is in a non-use state, the ball 92 is fixed by being fitted in the second click hole 94, so that there is no fear that the tread plate 86 might fall down clockwise in the FIG. 22(b).

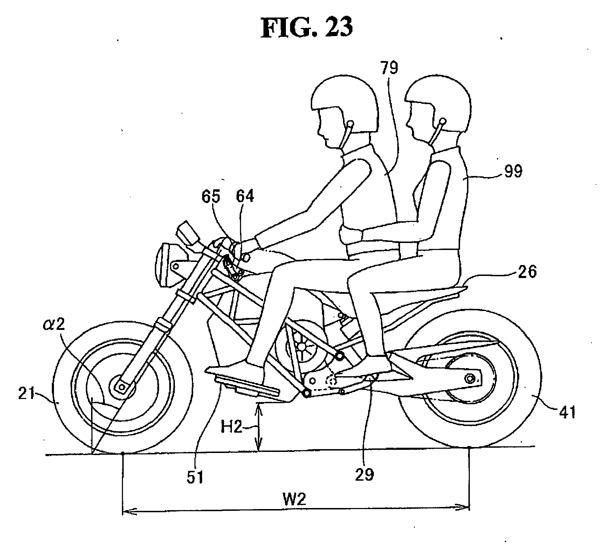

As shown in FIG. 23, when the pillion passenger 99 rides on the vehicle rear side of the driver 79, it suffices for the driver 79 to place his/her feet on the front steps 51, and for the pillion passenger 99 to place his/her feet on the rear steps 29.

According to this example, there is no need for the conventional steps for exclusive use for the pillion passenger that are called pillion steps.

In addition, the present invention is applicable not only to motorcycles but also to electric bicycles. In the bicycles, it is possible to omit the swing arm and the rear shock absorber.

In addition, the vehicle body form control mechanism is not restricted to the toggle mechanism. For instance, a hydraulic cylinder may be directly provided bridgingly between the drive case and the body frame. It is to be noted, however, that the toggle mechanism exhibits a speed reducing action by the screw shaft and the nut, that makes it possible to reduce the capacity of the electric motor. As a result, it is possible to adopt an electric motor which is inexpensive and small in size.

While the electric motor is provided on the drive source support case in the embodiment, the electric motor may be provided on the body frame side.

The operating member for operating the electric motor may not necessarily be added to the steering handle. The operating member may be provided in the vicinity of the meters. Thus, the operating member may be disposed at an arbitrary position. It should be noted here, however, that where the operating member is added to the steering handle, it can be operated more speedily and easily, so that a mode change can be easily performed.

In addition to the change of the vehicle body form from the cruiser mode to the sport mode, by the vehicle body form control mechanism, a change of the vehicle body form into an intermediate mode between the cruiser mode and the sport mode may also be performed.

The vehicle body form control mechanism according to the present invention is preferable for application to motorcycles.

In addition, the side stand according to the present invention is applicable not only to motorcycles but also to electric bicycles. In bicycles, it is possible to omit the swing arm and the rear shock absorber.

The side stand according to the present invention is preferable for application to motorcycles.

In addition, the click mechanism may be any mechanism that exhibits a click action, and the structure according to the present embodiment may be modified.

The front steps and the rear steps in the present invention are preferable for application to motorcycles.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A saddle vehicle comprising:
a front structure body (20) and a rear structure body (40);
wherein the front structure body (20) includes a body frame (24) having a head pipe (23) at a front portion thereof and extending in a vehicle fore-and-aft direction, a seat frame (25) extending from a rear portion of the body frame (24), a seat (26) supported by the seat frame (25), a front fork (22) steerably mounted to the head pipe, a steering handle (34) mounted to an upper end of the head pipe (23), and a front wheel (21) mounted to lower ends of the front fork (22);
the rear structure body (40) includes a rear wheel (41) disposed on a rear side of the front wheel (21), a drive source, disposed on a vehicle front side relative to the rear wheel (41), and operatively connected to drive the rear wheel (41), and a support body by which the drive source (42) and the rear wheel (41) are supported;
the front structure body (20) and the rear structure body (40) are interlinked through a hinge portion (52) so as to be bendable in a side view of the vehicle; and
a vehicle body form control mechanism (60) is provided for controlling a vehicle body form by setting the bend of the front structure body (20) and the rear structure body (40) to an arbitrary angle in the side view of the vehicle, with the hinge portion (52) as an axis.

2. The saddle vehicle according to claim 1, wherein the vehicle body form control mechanism (60) bends the front structure body (20) and the rear structure body (40), with the hinge portion (52) as an axis, in such a manner as to change the angle (θ1) between a first line segment (82) passing through the center of the hinge portion (52) and being orthogonal to a steering shaft (81) and a second line segment (83) passing through the center of the hinge portion (52) and through the center of the rear wheel (41).

3. The saddle vehicle according to claim 1 or 2, wherein the support body (43) includes a drive source support case (44) for supporting the drive source (42), a swing arm (46) vertically swingably mounted to the drive source support case (44) through a pivot shaft (45) for supporting the rear wheel (41), and a rear shock absorber (47) provided bridgingly between the swing arm (46) and the drive source support case (44).

4. The saddle vehicle according to anyone of claims 1 to 3, wherein the vehicle body form control mechanism (60) is a toggle mechanism including an actuator (61) mounted to a drive source support case (44) supporting the drive source (42) or to the body frame (24); a screw shaft (62) extending from the actuator (61) and being rotatable by the actuator (61); a nut (63) placed in screw engagement with the screw shaft (62); and a first link plate (64) linked at its tip to the drive source support case (44) and a second link plate (65) linked at its tip to the body frame (24), the first and second link plates (64, 65) being swingably linked to the nut (63).

5. The saddle vehicle according to claim 3 or 4, wherein the drive source (42) is an electric motor, and the drive source support case (44) supporting the drive source (42) is provided with a traveling battery (53) in which electrical energy to be supplied to the electric motor is stored.

6. The saddle vehicle according to claim 3 or 4, wherein the drive source (42) is an internal combustion engine, and the drive source support case (44) supporting the drive source (42) is provided with a fuel tank (84) in which a fuel to be supplied to the internal combustion engine is stored.

7. The saddle vehicle according to claim 4, wherein the actuator (61) has an electric motor as a main component, and is mounted to the drive source support case (44).

8. The saddle vehicle according to claim 5, wherein an operating member for sending a normal/reverse rotation command to a control unit for controlling the electric motor is added to the steering handle.

9. The saddle vehicle according to anyone of claims 1 to 8, and further including:
a side stand (31) disposed between the front wheel (21) and the rear wheel (41);
wherein the side stand (31) includes a stand support portion (85) provided on the body frame (24), a stand bracket (89) connected to the stand support portion (85) through a first pin (86) extending substantially along a longitudinal direction of the body frame (24) and which swings in a vehicle width direction until making contact with one of a plurality of stoppers (87, 88) and a stand arm (92) connected to the stand bracket (89) through a second pin (91) and said stand arm (92) swings from an upright position to a stored position.

10. The saddle vehicle according to claim 9, wherein attendant on the control of the vehicle body form, the stand bracket (89) is selectively placed in contact with the first stopper (87) when the seat (26) is in a high position, and the stand bracket (89) is selectively placed in contact with the second stopper (88) when the seat (26) is in a low position.

11. The saddle vehicle according to claim 10, wherein the first stopper (87) is provided at a vehicle-width-directionally side surface of the support body, and the second stopper (88) is provided at a slant surface (44b) inclined in a direction from an upper end of the first stopper (87) toward the center of the vehicle width.

12. The saddle vehicle according to claim 10, wherein the first stopper (87) is provided at a vehicle-width-directionally side surface of the support body, and the second stopper (88) is provided at a depth surface (44c) of the support body, the depth surface (44c) being located on the vehicle body center side relative to the vehicle-width-directionally side surface.

13. The saddle vehicle according to claim 11, wherein the stand bracket (89) has a pair of extension portions (89a) extending to the stand support portion (85), and is swingably engaged with the stand support portion (85) in such a manner that the stand support portion (85) is clamped between the extension portions (89a).

14. The saddle vehicle according to claim 9, wherein the stand bracket (89) has a single extension portion (89a) extending to the stand support portion (85), and is swingably engaged with the stand support portion (85) in such a manner that the extension portion (89a) is nipped by the stand support portion (85).

15. A saddle vehicle according to anyone of claims 1 to 14, and further including rear steps (29) disposed on lower sides of the seat (26) and on which the rider can place the rider's feet, and front steps (51) which are disposed on a vehicle front side relative to the rear steps (29) and on which the driver can place the driver's feet, the driver permitted to selectively use the rear steps (29) and the front steps (51); and
the front steps (51) are tiltable steps for placing in a stored state when not used.

16. The saddle vehicle according to claim 15, wherein the front step (51) includes a tread plate (86) on which to place the foot, a tread plate support shaft (87) extending in a for-and-aft direction of the vehicle and by which the tread plate (86) is swingably attached to the support body, and a clip mechanism (90) provided between the tread plate (86) and the support body and by which the tread plate (86) is fixed in a use position and a non-use position.

17. The saddle vehicle according to claim 15 or 16, wherein when the seat (26) is adjusted to a high position by the vehicle body form control mechanism (60), the rear steps (29) are used, whereas the front steps (51) are placed in the stored state.

18. The saddle vehicle according to claim 17, wherein when the seat (26) is adjusted to a low position by the vehicle body form control mechanism (60), the front steps (51) are used, whereas the rear steps (29) are placed in the stored state.

## Patentansprüche

1. Sattelfahrzeug, aufweisend:
einen vorderen Konstruktionskörper (20) und einen hinteren Konstruktionskörper (40);
wobei der vordere Konstruktionskörper (20) einen Rahmen (24) beinhaltet, der ein Kopfrohr (23) in seinem vorderen Bereich hat und sich in einer Fahrzeug vorne-hinten-Richtung erstreckt, einen Sitzrahmen (25), der sich von einem hinteren Bereich des Rahmens (24) erstreckt, einen Sitz (26), der durch den Sitzrahmen (25) getragen wird, eine Vordergabel (22), die steuerbar an dem Kopfrohr befestigt ist, einen Lenker (34), der an einem oberen Ende des Kopfrohrs (23) montiert ist und ein Vorderrad (21), das an unteren Enden der Vordergabel (22) montiert ist;
der hintere Konstruktionskörper (40) ein Hinterrad (41) beinhaltet, dass an einer hinteren Seite des Vorderrads (21) angeordnet ist, eine Antriebsquelle, die an einer Fahrzeugvorderseite relativ zu dem Hinterrad (41) angeordnet ist und betriebsfähig mit dem Hinterrad (41) verbunden ist um dieses anzutreiben, und einen Stützkörper, durch den die Antriebsquelle (42) und das Hinterrad (41) getragen werden;
der vordere Konstruktionskörper (20) und der hintere Konstruktionskörper (40) miteinander durch einen Gelenkabschnitt (52) miteinander verbunden sind, so dass sie in einer Seitenansicht des Fahrzeugs biegbar sind; und
ein Fahrzeugkörper vom Steuermechanismus (60) vorgesehen ist zum Steuern einer Fahrzeugkörperform durch Einstellen der Biegung des vorderen Konstruktionskörpers (20) und des hinteren Konstruktionskörpers (40) auf einen beliebigen Winkel in der Seitenansicht des Fahrzeugs, wobei der Gelenkabschnitt (52) eine Achse ist,

2. Sattelfahrzeug gemäß Anspruch 1, wobei der Fahrzeugkörperformsteuermechanismus (60) den vorderen Konstruktionskörper (20) und den hinteren Konstruktionskörper (40) biegt, wobei der Gelenkabschnitt (52) als eine Achse wirkt, in einer solchen Weise, dass der Winkel (θ1) zwischen dem ersten Liniensegment (82), das durch das Zentrum des Gelenkabschnitts (52) verläuft und orthogonal zu einer Steuerwelle (51) ist, und einem zweiten Liniensegment (83), das durch das Zentrum des Gelenkabschnitts (52) und durch das Zentrum des Hinterrads (41) verläuft.

3. Sattelfahrzeug gemäß Anspruch 1 oder 2, wobei der Stützkörper (83) ein Antriebsquellen-Stützgehäuse (44) beinhaltet, zum Stützen der Antriebsquelle (42), einen Schwenkarm (46), der schwingend an dem Antriebsquellen-Stützgehäuse (44) durch eine Drehachse (45) zum Tragen des Hinterrads (41) befestigt ist, und einen hinteren Stoßdämpfer (47), der überbrückend zwischen dem Schwenkarm (46) und dem Antriebsquellen-Stützgehäuse (44) vorgesehen ist.

4. Sattelfahrzeug gemäß einem der Ansprüche 1 bis 3, wobei der Fahrzeugkörperformsteuermechanismus (60) einen Kipphebelmechanismus ist, der einen Aktuator (61) beinhaltet, der an dem Antriebsquellen-Stützgehäuse (44) befestigt ist, der die Antriebsquelle (42) stützt oder an dem Rahmen (24); ein Schraubenschaft (62), der sich von dem Aktuator (61) erstreckt und der durch den Aktuator (61) drehbar ist; eine Mutter (63), die in Schraubverbindung mit dem Schraubenschaft (62) eingesetzt ist; und eine erste Verbindungsplatte (64), die mit ihrer Spitze mit dem Antriebsquellen-Stützgehäuse (44) verbunden ist, und eine zweite Verbindungsplatte (65), die an ihrer Spitze mit dem Rahmen (24) verbunden ist, wobei die erste und die zweite Verbindungsplatte (64, 65) schwenkbar mit der Mutter (63) verbunden sind.

5. Sattelfahrzeug gemäß Anspruch 3 oder 4, wobei die Antriebsquelle (42) ein Elektromotor ist, und das Antriebsquellen-Stützgehäuse (44), das die Antriebsquelle (42) stützt, mit einer Fahrbatterie (53) versehen ist, in der elektrische Energie gespeichert ist, die zum Versorgen des Elektromotors vorgesehen ist.

6. Sattelfahrzeug gemäß Anspruch 3 oder 4, wobei die Antriebsquelle (42) eine Brennkraftmaschine ist und das Antriebsquellen-Stützgehäuse (44), das die Antriebsquelle (42) trägt mit einem Kraftstofftank (84) versehen ist, in dem Kraftstoff gespeichert ist, der zum Versorgen der Brennkraftmaschine vorgesehen ist.

7. Sattelfahrzeug gemäß Anspruch 4, wobei der Aktuator (61) einen Elektromotor als Hauptkomponente hat und an dem Antriebsquellen-Stützgehäuse (44) befestigt ist.

8. Sattelfahrzeug gemäß Anspruch 5, wobei ein Betätigungselement zum Senden eines normalen/umgekehrten Drehrichtung-Befehls an einer Steuereinheit zum Steuern des elektrischen Motors dem Lenker hinzugefügt ist.

9. Sattelfahrzeug gemäß irgendeinem der Ansprüche 1 bis 8, weiterhin beinhaltend:
einen Seitenständer (31), der zwischen dem Vorderrad (21) und dem Hinterrad (41) angeordnet ist;
wobei der Seitenständer (21) einen Ständerstützabschnitt (85) beinhaltet, der an dem Rahmen (24) vorgesehen ist, eine Ständerkonsole (89), die an dem Ständerstützabschnitt (85) verbunden ist mittels eines ersten Stifts (86), der sich im Wesentlichen entlang einer Längsrichtung des Rahmens (24) erstreckt und der in einer Fahrzeugbreitenrichtung schwingt, bis er einen einer Mehrzahl von Stoppern (87, 88) berührt, und einen Ständerarm (92), der mit der Ständerkonsole (89) verbunden ist durch einen zweiten Stift (91), und der Ständerarm (92) von einer aufrechten Position zu einer Lagerungsposition schwingt.

10. Sattelfahrzeug gemäß Anspruch 9, wobei einer Steuerung der Fahrzeugkörperform folgend die Ständerkonsole (89) wahlweise in Kontakt mit dem ersten Stopper (87) platziert wird, wenn der Sitz (26) in einer hohen Position ist, und die Ständerkonsole (89) wahlweise in Kontakt mit dem zweiten Stopper (88) platziert wird, wenn der Sitz (26) in einer niedrigen Position ist.

11. Sattelfahrzeug gemäß Anspruch 10, wobei der erste Stopper (87) an einer Fahrzeugbreitenrichtungsseitenoberfläche des Stützkörpers vorgesehen ist und der zweite Stopper (88) an einer schrägen Oberfläche (44b) vorgesehen ist, die in Richtung von einem oberen Ende des ersten Stoppers (87) auf das Zentrum der Fahrzeugbreite hin geneigt ist.

12. Sattelfahrzeug gemäß Anspruch 10, wobei der erste Stopper (87) in einer zur Fahrzeugbreite gerichteten Seitenoberfläche des Stützkörpers vorgesehen ist und der zweite Stopper (88) an einer tiefen Oberfläche (44c) des Stützkörpers vorgesehen ist, wobei die Tiefenfläche (44c) auf der Fahrzeugkörperzentrumsseite relativ zu der zu der Fahrzeugbreite gerichteten Seitenoberfläche positioniert ist.

13. Sattelfahrzeug gemäß Anspruch 11, wobei die Ständerkonsole (89) ein Paar von Verlängerungsabschnitten (89a) hat, die sich zu dem Ständerstützabschnitt (85) hin erstrecken und schwingend mit dem Ständerstützabschnitt (85) in einer solchen Weise zusammenwirken, dass der Ständerstützabschnitt (85) zwischen die Verlängerungsabschnitte (89) geklemmt wird.

14. Sattelfahrzeug gemäß Anspruch 9, wobei die Ständerkonsole (89) einen einzigen Verlängerungsabschnitt (89) hat, der sich auf den Ständerstützabschnitt (85) zu erstreckt und schwingbar mit dem Ständerstützabschnitt (85) in einer solchen Weise zusammenwirkt, dass der Verlängerungsabschnitt (89a) von dem Ständerstützabschnitt (85) erfasst wird.

15. Sattelfahrzeug gemäß einem der Ansprüche 1 bis 14, und weiterhin beinhaltend hintere Trittflächen (29), die an unteren Seiten des Sitzes (26) angeordnet sind und auf denen der Fahrer die Fahrerfüße platzieren kann, und vordere Trittflächen (51), die an einer Fahrzeugvorderseite relativ zu den hinteren Trittflächen (29) angeordnet sind auf denen der Fahrer die Fahrerfüße platzieren kann, wobei der Fahrer wahlweise die hinteren Trittflächen (29) und die vorderen Trittflächen (51) verwenden kann; und
die vorderen Trittflächen (51) klappbare Trittflächen sind um in einen Lagerungszustand platziert zu werden, wenn sie nicht benötigt werden.

16. Sattelfahrzeug gemäß Anspruch 15, wobei die vorderen Trittfläche (51) eine Auftrittplatte (86) beinhalten, auf welchen der Fuß platziert wird, eine Auftrittplattenstützwelle (87), die sich in einer Vorne-Hinten-Richtung des Fahrzeugs erstreckt und durch welche die Auftrittplatte (86) drehbar an den Stützkörper angebracht ist, und einen Klippmechanismus (90), der zwischen der Auftrittplatte (86) und dem Stützkörper angeordnet ist und durch welchen die Auftrittplatte (86) in einer Benutzungsposition und einer Nichtbenutzungsposition fixiert ist.

17. Sattelfahrzeug gemäß Anspruch 15 oder 16, wobei, wenn der Sitz (26) in eine hohe Position durch den Fahrzeugkörperformsteuermechanismus eingestellt ist, die hinteren Trittflächen (29) benutzt werden, wohingegen die vorderen Trittflächen (51) in dem Lagerungszustand platziert sind.

18. Sattelfahrzeug gemäß Anspruch 17, wobei, wenn der Sitz (26) durch den Fahrzeugkörperformsteuerungsabschnitt (60) in eine niedrige Position eingestellt ist, die vordere Trittfläche (51) benutzt wird, wohingegen die hintere Trittfläche (29) in dem Lagerungszustand platziert werden.

## Revendications

1. Véhicule à selle comprenant :
une caisse de structure avant (20) et une caisse de structure arrière (40) ;
dans lequel la caisse de structure avant (20) comprend un cadre de caisse (24) ayant une tête de direction (23) au niveau d'une partie avant de celui-ci et s'étendant dans une direction avant-arrière du véhicule, un cadre de siège (25) s'étendant depuis une partie arrière du cadre de caisse (24), un siège (26) supporté par le cadre de siège (25), une fourche avant (22) montée de façon dirigeable sur la tête de direction, une poignée de direction (34) montée sur une extrémité supérieure de la tête de direction (23), et une roue avant (21) montée sur des extrémités inférieures de la fourche avant (22) ;
la caisse de structure arrière (40) comprend une roue arrière (41) disposée sur un côté arrière de la roue avant (21), une source d'entraînement, disposée sur un côté avant du véhicule par rapport à la roue arrière (41), et raccordée de manière fonctionnelle pour entraîner la roue arrière (41), et une caisse de support grâce à laquelle la source d'entraînement (42) et la roue arrière (41) sont supportées ;
la caisse de structure avant (20) et la caisse de structure arrière (40) sont reliées par l'intermédiaire d'une partie articulée (52) de façon à être pliable en vue de côté du véhicule ; et
un mécanisme de commande de forme de caisse de véhicule (60) est prévu pour commander une forme de caisse de véhicule en paramétrant la courbure de la caisse de structure avant (20) et de la caisse de structure arrière (40) à un angle arbitraire en vue de côté du véhicule, avec la partie articulée (52) en tant qu'axe.

2. Véhicule à selle selon la revendication 1, dans lequel le mécanisme de commande de forme de caisse de véhicule (60) courbe la caisse de structure avant (20) et la caisse de structure arrière (40), avec la partie articulée (52) en tant qu'axe, de manière à modifier l'angle (θ1) entre un premier segment de ligne (82) passant à travers le centre de la partie articulée (52) et orthogonal à un arbre de direction (81) et un second segment de ligne (83) passant à travers le centre de la partie articulée (52) et à travers le centre de la roue arrière (41).

3. Véhicule à selle selon la revendication 1 ou 2, dans lequel la caisse de support (43) comprend un carter de support de source d'entraînement (44) pour supporter la source d'entraînement (42), un bras oscillant (46) monté avec faculté d'oscillation verticale sur le carter de support de source d'entraînement (44) par l'intermédiaire d'un arbre de pivot (45) pour supporter la roue arrière (41), et un amortisseur de choc arrière (47) prévu en pont entre le bras oscillant (46) et le carter de support de source d'entraînement (44).

4. Véhicule à selle selon l'une quelconque des revendications 1 à 3, dans lequel le mécanisme de commande de forme de caisse de véhicule (60) est un mécanisme d'activation comprenant un actionneur (61) monté sur un carter de support de source d'entraînement (44) supportant la source d'entraînement (42) ou sur le cadre de caisse (24) ; un arbre à vis (62) s'étendant depuis l'actionneur (61) et pouvant être mis en rotation par l'actionneur (61) ; un écrou (63) placé en accouplement à vis avec l'arbre à vis (62) ; et une première plaque de liaison (64) liée au niveau de sa pointe au carter de support de source d'entraînement (44) et une seconde plaque de liaison (65) liée au niveau de sa pointe au cadre de caisse (24), les première et seconde plaques de liaison (64, 65) étant liées avec faculté d'oscillation à l'écrou (63).

5. Véhicule à selle selon la revendication 3 ou 4, dans lequel la source d'entraînement (42) est un moteur électrique, et le carter de support de source d'entraînement (44) supportant la source d'entraînement (42) est pourvu d'une batterie de déplacement (53) dans laquelle est stockée l'énergie électrique à fournir au moteur électrique.

6. Véhicule à selle selon la revendication 3 ou 4, dans lequel la source d'entraînement (42) est un moteur à combustion interne, et le carter de support de source d'entraînement (44) supportant la source d'entraînement (42) est pourvu d'un réservoir de carburant (84) dans lequel est stocké un carburant à fournir au moteur à combustion interne.

7. Véhicule à selle selon la revendication 4, dans lequel l'actionneur (61) comporte un moteur électrique en tant que composant principal, et est monté sur le carter de support de source d'entraînement (44).

8. Véhicule à selle selon la revendication 5, dans lequel un organe de fonctionnement pour envoyer un ordre de rotation normale/inverse à une unité de commande pour commander le moteur électrique est ajouté à la poignée de direction.

9. Véhicule à selle selon l'une quelconque des revendications 1 à 8, et comprenant en outre :
une béquille latérale (31) disposée entre la roue avant (21) et la roue arrière (41) ;
dans lequel la béquille latérale (31) comprend une partie de support de béquille (85) prévue sur le cadre de caisse (24), une console de béquille (89) raccordée à la partie de support de béquille (85) par l'intermédiaire d'une première goupille (86) s'étendant sensiblement le long d'une direction longitudinale du cadre de caisse (24) et qui oscille dans une direction de la largeur du véhicule jusqu'à entrer en contact avec l'un d'une pluralité d'arrêtoirs (87, 88) et un bras de béquille (92) raccordé à la console de béquille (89) par l'intermédiaire d'une seconde goupille (91) et ledit bras de béquille (92) oscille d'une position droite à une position ramassée.

10. Véhicule à selle selon la revendication 9, dans lequel, associée à la commande de la forme de caisse de véhicule, la console de béquille (89) est placée sélectivement en contact avec le premier arrêtoir (87) lorsque le siège (26) est en position haute, et la console de béquille (89) est placée sélectivement en contact avec le second arrêtoir (88) lorsque le siège (26) est en position basse.

11. Véhicule à selle selon la revendication 10, dans lequel le premier arrêtoir (87) est prévu au niveau d'une surface de côté dans la direction de la largeur du véhicule de la caisse de support, et le second arrêtoir (88) est prévu au niveau d'une surface oblique (44b) inclinée dans une direction depuis une extrémité supérieure du premier arrêtoir (87) vers le centre de la largeur du véhicule.

12. Véhicule à selle selon la revendication 10, dans lequel le premier arrêtoir (87) est prévu au niveau d'une surface de côté dans la direction de la largeur du véhicule de la caisse de support, et le second arrêtoir (88) est prévu au niveau d'une surface en profondeur (44c) de la caisse de support, la surface en profondeur (44c) étant située sur le côté central de la caisse de véhicule par rapport à la surface de côté dans la direction de la largeur du véhicule.

13. Véhicule à selle selon la revendication 11, dans lequel la console de béquille (89) comporte une paire de parties d'extension (89a) s'étendant jusqu'à la partie de support de béquille (85), et est accouplée avec faculté d'oscillation à la partie de support de béquille (85) de manière à ce que la partie de support de béquille (85) soit serrée entre les parties d'extension (89a).

14. Véhicule à selle selon la revendication 9, dans lequel la console de béquille (89) comporte une partie d'extension unique (89a) s'étendant jusqu'à la partie de support de béquille (85), et est accouplée avec faculté d'oscillation à la partie de support de béquille (85) de manière à ce que la partie d'extension (89a) soit pincée par la partie de support de béquille (85).

15. Véhicule à selle selon l'une quelconque des revendications 1 à 14, et comprenant en outre des repose-pieds arrière (29) disposés sur des côtés inférieurs du siège (26) et sur lesquels le passager peut placer les pieds du passager, et des repose-pieds avant (51) qui sont disposés sur un côté avant du véhicule par rapport aux repose-pieds arrière (29) et sur lesquels le pilote peut placer les pieds du pilote, le pilote pouvant utiliser sélectivement les repose-pieds arrière (29) et les repose-pieds avant (51) ; et
les repose-pieds avant (51) sont des repose-pieds repliables pouvant être placés en état ramassé lorsqu'ils ne sont pas utilisés.

16. Véhicule à selle selon la revendication 15, dans lequel le repose-pieds avant (51) comprend un marchepied (86) sur lequel placer le pied, un arbre de support de marchepied (87) s'étendant dans une direction avant-arrière du véhicule et grâce auquel le marchepied (86) est fixé avec faculté d'oscillation à la caisse de support, et un mécanisme d'attache (90) prévu entre le marchepied (86) et la caisse de support et grâce auquel le marchepied (86) est fixé en position d'utilisation et en position de non-utilisation.

17. Véhicule à selle selon la revendication 15 ou 16, dans lequel lorsque le siège (26) est réglé à une position haute par le mécanisme de commande de forme de caisse de véhicule (60), les repose-pieds arrière (29) sont utilisés, tandis que les repose-pieds avant (51) sont placés en état ramassé.

18. Véhicule à selle selon la revendication 17, dans lequel lorsque le siège (26) est réglé à une position basse par le mécanisme de commande de forme de caisse de véhicule (60), les repose-pieds avant (51) sont utilisés, tandis que les repose-pieds arrière (29) sont placés en état ramassé.
